# EUROPÄISCHE PATENTSCHRIFT

(11) **EP 2 972 071 B1**
(45) Veröffentlichungstag und Bekanntmachung des Hinweises auf die Patenterteilung: **21.12.2016**
(21) Anmeldenummer: 14723313.4
(22) Anmeldetag: 14.03.2014
(51) Int. Cl.: G01B 11/14, A22B 5/00, G01B 11/245

(54) **VORRICHTUNG ZUR VERMESSUNG EINES SCHLACHTTIERKÖRPEROBJEKTS**
DEVICE FOR MEASURING A SLAUGHTER ANIMAL BODY OBJECT
DISPOSITIF DE MESURE D'UN OBJET CARCASSE D'ANIMAL DE BOUCHERIE

(30) Priorität: 15.03.2013 DE 202013002483 U
(43) Veröffentlichungstag der Anmeldung: 20.01.2016
(73) Patentinhaber: CSB-System AG, 52511 Geilenkirchen (DE)
(72) Erfinder: SCHMITZEK, Peter, 52511 Geilenkirchen (DE)
(74) Vertreter: Weihrauch, Frank
(86) Internationale Anmeldenummer: PCT/DE2014/000122
(87) Internationale Veröffentlichungsnummer: WO 2014/139503

(56) Entgegenhaltungen:
- WO-A1-92/00523
- WO-A1-2004/012146
- US-A1- 2005 257 748

## Beschreibung

Die Erfindung betrifft eine Vorrichtung zur Vermessung eines Schlachttierkörperobjekts, insbesondere zum Vermessen relevanter Strukturbereiche an einer Oberfläche des Schlachttierkörperobjekts.

Aus dem Stand der Technik ist es bereits bekannt, eine Oberfläche eines Schlachttierkörperobjekts mittels einer elektronischen Kamera optisch zu erfassen. Die relevante Oberfläche stellt in diesen Fällen häufig eine sogenannte Spaltebene dar, welche sich durch ein Trennen eines Schlachttierkörpers in zwei Schlachttierkörperhälften ergibt.

Die durch die Kamera ermittelte optische Aufnahme wird im Anschluss mittels einer Bildanalyse photogrammetrisch ausgewertet, wobei unterschiedliche Gewebearten detektiert und anhand von Konturverläufen und markanter Bezugspunkte einzelne Strecken und/oder Flächen berechnet werden.

Ein Verfahren zur Bewertung von Schlachttierkörpern ist in Druckschrift DE 44 08 604 C2 offenbart.
Hierbei erfolgt eine Bildaufnahme des zu bewertenden Schlachttierkörpers vor einem blauen Hintergrund und eine anschließende Digitalisierung und Speicherung der erfassten Bilder auf einem Computer.
Anhand von zuvor bestimmten Farbklassifikatoren und häufigen Farbwerten werden zum einen die äußeren Konturen des Schlachttierkörpers bestimmt und zum anderen bestimmte Bildpunkte den jeweiligen Geweben zugeordnet.
Darüber hinaus wird die Rückseite des Schlachttierkörpers zur dreidimensionalen Objektbestimmung, unter Einbindung eines Lichtschnittverfahrens, optisch erfasst, um hierdurch die Konformationsklasse des Schlachttierkörpers zu bewerten.

Ferner geht die Gewinnung von charakteristischen Messwerten und Parametern in der Spaltebene eines Schlachttierkörpers mittels einer automatischen Bildanalyse und einer anschlie3ßenden photogrammetrischen Auswertung zur Bewertung und Qualitätsbeurteilung aus den Druckschriften DE 197 33 216 C1, DE 198 47 232 C2 und DE 199 36 032 C1 hervor.

Um bei den bekannten Lösungen ein korrektes und verwertbares Messergebnis zu erhalten, ist es insbesondere notwendig, dass die Spaltebene zum einen weitestgehend plan ist und zum anderen während der gesamten Vermessung orthogonal zu der Kameraebene ausgerichtet bleibt.

Zur Ausrichtung der Schlachttierkörper werden diese in der Regel an Führungsrohren relativ zur Kameraebene bewegt, wobei es durch eine zum Teil ungleichmäßige Bewegung unter Umständen zu Schwingungen, Drehbewegungen oder Verwindungen um die vertikale Achse des Schlachttierkörpers kommen kann.

Durch die so hervorgerufenen Ungleichmäßigkeiten wird die Messgenauigkeit der an der Spaltfläche des Schlachttierkörpers zu bestimmenden Strecken und Flächen beeinträchtigt, wodurch ein korrektes Messergebnis nicht in jedem Fall gewährleistet werden kann.
Auch ist für eine korrekte Vermessung des Schlachttierkörpers stets ein definierter Abstand zwischen dem Schlachttierkörper und den erfassenden Kameras notwendig. Dieser Abstand kann jedoch durch die unerwünschten Bewegungen des Schlachttierkörpers bei dessen Positionierung variieren, wodurch die Genauigkeit der Messergebnisse zusätzlich beeinträchtigt werden kann.

Des Weiteren kann auch eine plane Spaltebene je nach Verarbeitungsverfahren des Schlachttierkörpers nicht immer gewährleistet werden. Ferner liegt bei anderen Schlachttierkörperobjekten, welche nicht Schlachttierkörperhälften sind, selbst idealisiert keine plane, sondern eine unregelmäßige Oberflächenebene vor, wie beispielsweise bei Schinken.

Ein weiterer Nachteil der bekannten Vorrichtungen besteht darin, dass die exakte Positionierung der Schlachttierkörperobjekte, insbesondere sofern es sich dabei um Schlachttierkörperhälften handelt, gegenüber der jeweiligen Kamera in der Regel über eine Positioniervorrichtung erfolgt, welche von den Schlachttierkörperobjekten zwangsläufig zumindest abschnittsweise berührt wird. Da jedoch in der Regel mehrere Schlachttierkörperobjekte hintereinander durch die gleiche Positioniervorrichtung positioniert werden und in der Regel die Positioniervorrichtung nicht nach jedem Schlachttierkörperobjekt gereinigt werden kann, ergibt sich somit auch ein entsprechendes Hygienerisiko, speziell im Falle eines verunreinigten Schlachttierkörperobjekts.

Aus der Druckschrift DE 10 2004 047 773 A1 geht eine weitere Möglichkeit zur Bestimmung physiologischer Größen eines Schlachttierkörperobjekts hervor, durch welche eine Handelswertbestimmung, eine Berechnung von Fleisch- und Gewichtsanteilen und vorzugsweise eine genaue Bestimmung von Zerlegepunkten für eine automatische Zerlegung ermöglicht werden sollen.
In diesem Fall wird ein ganzer Schlachttierkörper oder werden Teile von diesem mittels eines tomographischen Verfahrens erfasst und die so bereitgestellten, scheibenförmigen Segmente des Schlachttierkörperobjekt zu einem virtuellen Modell zusammengeführt.
In dem resultierenden Modell werden Kompartimente des Fleisch-, Fett- und Knochengewebes wiedergegeben und so eine Bestimmung von Volumina, Strecken und Flächen innerhalb des Schlachttierkörperobjekts ermöglicht.
Die hier beschriebene Lösung weist jedoch insbesondere die Nachteile auf, dass zum einen die Anwendung des Tomografieverfahrens einen hohen technologischen und finanziellen Aufwand bedingt und dass zum anderen wegen des Zeitaufwandes hierbei nur ein geringer Durchsatz der zu vermessenden Schlachttierkörper bereitstellbar ist.

Des Weiteren beschreibt die Druckschrift US 2005/0257748 A1 eine Vorrichtung sowie ein Verfahren zur volumetrischen und dimensionalen Vermessung von Nutztieren. Diese sieht die Verwendung zweier 3D-Kameras vor, so dass nach der Erfassung der volumetrischen und linearen Messwerte der Oberfläche des jeweiligen Tiers die Ermittlung des Abstandes zweier Messpunkte anhand der erfassten Raumkoordinaten durchführbar ist.
In der Druckschrift WO 92/00523 A1 wird die Verwendung von zwei oder drei 2D-Kameras (Bildkameras) vorgeschlagen, um die Abmessungen eines Schlachttierkörperobjektes zu bestimmen. Dabei wird durch die Bildkameras ein Bild des Schlachttierkörpers aus mehreren unterschiedlichen Blickwinkeln bereitgestellt, aus welchem mittels einer Auswertungseinheit die notwendigen Messdaten ermittelt werden.
Die Druckschrift WO 2004/12146 A1 offenbart ein Bildaufnahmesystem zur Erfassung von Tieren, wobei hier die Auswertung der körperlichen Verfassung eines Tiers angestrebt wird. Zu diesem Zweck wird mittels eines Musterprojektors ein Muster auf der Oberfläche des Tiers erzeugt. Als Bilderfassungseinheit liegen zwei 2D-Kameras vor.

Es ist somit die Aufgabe der Erfindung, eine Vorrichtung bereitzustellen, welche ein einfach und kostengünstig durchzuführendes Vermessen von Schlachttierkörperobjekten ermöglicht und welche gleichzeitig eine hohe Messgenauigkeit gewährleistet.

Die Aufgabe wird durch die im Patentanspruch 1 aufgeführten Merkmale gelöst. Bevorzugte Weiterbildungen ergeben sich aus den abhängigen Ansprüchen.

Schlachttierkörperobjekte im Sinne der erfindungsgegenständlichen Lösungen können insbesondere ganze Schlachttierkörper, Schlachttierkörperhälften oder Teile wie beispielsweise Schinken sein.

Eine erfindungsgemäße Vorrichtung zur Vermessung eines Schlachttierkörperobjekts weist zum einen eine Bildkamera mit einem Bildkameraerfassungsbereich auf, wobei innerhalb des Bildkameraerfassungsbereiches ein relevanter Abschnitt der Oberfläche, im Falle einer Schlachttierkörperhälfte insbesondere eine Oberfläche der Schlachttierkörperhälfte auf einer Spaltseite, optisch erfassbar ist.

Bei einer stationären Variante der erfindungsgemäßen Vorrichtung wird das Schlachttierkörperobjekt vorzugsweise mittels eines Transportsystems derart an der Bildkamera vorbeigeführt, dass der relevante Abschnitt der Oberfläche, im Falle einer Schlachttierkörperhälfte die Spaltseite der Schlachttierkörperhälfte den Bildkameraerfassungsbereich kreuzt.
Dabei ist der Bildkameraerfassungsbereich beispielsweise so ausgebildet, dass die gesamte spaltseitige Oberfläche der Schlachttierkörperhälfte erfassbar ist. Je nach Anwendungs-fall ist es jedoch auch möglich, dass in dem Bildkameraerfassungsbereich nur ein Abschnitt der spaltseitigen Oberfläche der Schlachttierkörperhälfte erfasst wird. Als Transportsystem kommen bei Schlachttierkörperhälften vor allem Rollenhaken sowie bei anderen Schlachttierkörperteilen auch Transportbänder in Betracht.

In jedem Fall erfolgt bei einer stationären Variante der erfindungsgemäßen Vorrichtung eine Positionierung des Schlachttierkörperobjekts derart, dass der relevante Abschnitt der Oberfläche, im Falle einer Schlachttierkörperhälfte die spaltseitige Oberfläche der Schlachttierkörperhälfte der Bildkamera zumindest hinreichend zugewandt ist, um auf diese Weise eine erfolgreiche Erfassung relevanter Bereiche auf der relevanten, also bei Schlachttierkörperhälften der spaltseitigen Oberfläche zu gewährleisten.

Die Bildkamera wird erfindungsgemäß durch eine 2D-Kamera gebildet und ermöglicht es, innerhalb des Bildkameraerfassungsbereichs Lichtintensitätswerte (g) von Bildpunkten sowie die Flächenkoordinaten (x, y) der Bildpunkte auf der spaltseitigen Oberfläche der Schlachttierkörperhälfte zu erfassen.

Die Erfassung der Lichtintensitätswerte kann beispielsweise auf bekannte Art und Weise durch eine Ermittlung von Grau-stufenwerten bereitgestellt werden. So kann beispielsweise bei innerhalb der spaltseitigen Oberfläche der Schlachttierkörperhälfte oder der relevanten Oberfläche eines sonstigen Schlachttierkörperobjekts vorliegendem Fettgewebe ein heller Graustufenwert und Fleischgewebe ein dunkler Graustufenwert ausgegeben werden.

Die Bildkamera ist vorzugsweise so ausgerichtet, dass deren Mittenachse, nachfolgend auch als Normale bezeichnet, weitestgehend in einem rechten Winkel zur Bewegungsachse des Schlachttierkörperobjekts angeordnet ist.

Die Mittenachse stellt in diesem Zusammenhang die optische Achse der Bildkamera dar, während die Bewegungsachse des Schlachttierkörperobjekts die Achse bezeichnet, auf welcher das Schachttierkörperobjekt durch den Bildkameraerfassungsbereich hindurch bewegt wird.

Als weiteres Merkmal sind durch die erfindungsgemäße Bildkamera die Lichtintensitätswerte der Bildpunkte und die diesen zugeordneten Flächenkoordinaten als Lichtintensitätswertdaten übertragbar bereitstellbar.

Ferner weist eine erfindungsgemäße Vorrichtung eine Auswertungseinheit auf, welche mit der Bildkamera verbunden ist und welche die durch die Bildkamera bereitgestellten Lichtintensitätswertdaten erfasst und verarbeitet.
Die Verbindung zwischen der Bildkamera und der Auswertungseinheit kann erfindungsgemäß sowohl drahtgebunden als auch drahtlos ausgebildet sein und ermöglicht die Übertragung der Lichtintensitätswertdaten an die Auswertungseinheit.

Erfindungsgemäß ist die Vorrichtung zum Vermessen eines Schlachttierkörperobjekts dadurch gekennzeichnet, dass diese zusätzlich eine Tiefenkamera aufweist.
Die Tiefenkamera weist einen Tiefenkameraerfassungsbereich auf, in welchem ebenfalls der relevante Abschnitt der Oberfläche, im Falle einer Schlachttierkörperhälfte die Oberfläche der Schlachttierkörperhälfte auf der Spaltseite, optisch erfassbar ist und in welchem die Raumkoordinaten von Bildpunkten erfassbar sind.

Die Raumkoordinaten der erfassten Bildpunkte setzen sich erfindungsgemäß aus deren Flächenkoordinaten (x, y) und einem Tiefenwert (z) zusammen.

Die Tiefenkamera ist ferner dazu in der Lage, die Raumkoordinaten der Bildpunkte als Raumkoordinatendaten übertragbar bereitzustellen.
Weiterhin zeichnet sich die erfindungsgemäße Vorrichtung dadurch aus, dass diese eine Positioniervorrichtung zur Positionierung der Tiefenkamera relativ zu der Bildkamera aufweist.

Die Positionierung der Tiefenkamera relativ zu der Bildkamera erfolgt dabei erfindungsgemäß derart, dass sich der Tiefenkameraerfassungsbereich und der Bildkameraerfassungsbereich in einem gemeinsamen Erfassungsbereich zumindest teilweise überschneiden, wobei die von der Auswertungseinheit auszuwertenden Bildpunkte in dem gemeinsamen Erfassungsbereich liegen.
Je nach Anordnung von Tiefen- und Bildkamera zueinander, beispielsweise horizontal oder vertikal, können sich der Tiefenerfassungsbereich und der Bildkameraerfassungsbereich entweder horizontal oder auch vertikal teilüberschneiden. Vorzugsweise sind hierbei die Erfassungsbereiche der Tiefen- und Bildkamera und deren Positionierung zueinander so festgelegt, dass der gemeinsame Erfassungsbereich möglichst groß ist, um die Auflösung von Tiefenkamera und Bildkamera möglichst gut auszunutzen.

Die Erfassung der Bildpunkte durch die Tiefenkamera und durch die Bildkamera erfolgt erfindungsgemäß in Echtzeit und gleichzeitig. Gleichzeitig bedeutet in diesem Zusammenhang, dass zwischen dem Erfassen durch die Bildkamera und dem Erfassen durch die Tiefenkamera keine oder lediglich eine so hinreichend kleine Bewegung des Schlachttierkörperobjekts erfolgt ist, dass eine Zuordnung der Flächenkoordinaten (x, y) der erfassten Bildpunkte von Bildkamera und Tiefenkamera zueinander möglich bleibt.
Die Echtzeitfähigkeit der Tiefenkamera bedingt dabei insbesondere eine hohe Bildrate, also dass die Tiefenkamera in der Lage ist, Raumkoordinaten in dem Tiefenkameraerfassungsbereich gleichzeitig zu erfassen.

Die erfindungsgemäße Vorrichtung zeichnet sich ferner dadurch aus, dass auch die Tiefenkamera mit der Auswertungseinheit verbunden ist, wobei die Auswertungseinheit die durch die Tiefenkamera bereitgestellten Raumkoordinaten erfasst.
Die Verbindung ermöglicht die Übertragung der Raumkoordinatendaten an die Auswertungseinheit. Auch die Verbindung zwischen der Tiefenkamera und der Auswertungseinheit kann sowohl drahtgebunden als auch drahtlos ausgebildet sein.

Die Auswertungseinheit ist erfindungsgemäß dazu in der Lage, die durch die Bildkamera bereitgestellten Lichtintensitätswertdaten von Bildpunkten den durch die Tiefenkamera bereitgestellten Raumkoordinatendaten von Bildpunkten zuzuordnen, die übereinstimmende Flächenkoordinaten (x, y) aufweisen. Mittels der bereitgestellten Daten der Bildkamera und der Tiefenkamera liegen in dem gemeinsamen Erfassungsbereich Bildpunkte vor, für welche erfindungsgemäß sowohl die Flächenkoordinaten (x, y) und der Lichtintensitätswert (g) als auch der Tiefenwert (z) erfasst sind und wobei die Flächen-koordinaten aus den Lichtintensitätswertdaten mit den Flä-chenkoordinaten aus den Raumkoordinatendaten erfindungsgemäß identisch sind.

Die zugeordneten Lichtintensitätswert- und Raumkoordinatendaten werden besonders vorteilhaft als Datentupel (x, y, z, g) bereitgestellt.

Die Auswertungseinheit ist darüber hinaus erfindungsgemäß dazu in der Lage, aus den durch die Bildkamera bereitgestellten Lichtintensitätswertdaten der Bildpunkte definierte Messpunkte an der Oberfläche der Schlachttierkörperhälfte zu identifizieren. Das Identifizieren von Messpunkten bedeutet, dass durch die Auswertungseinheit mittels Bildanalyse und Objekterkennung charakteristische Strukturen an der Oberfläche des Schlachttierkörperobjekts, beispielsweise Muskeln, Fettgewebe oder Knochen erkannt werden. Hierzu werden auf Basis der Lichtintensitätswertunterschiede rechentechnisch unterschiedliche Gewebebereiche detektiert und selektiert, um mittels eines Konturenverfolgungsalgorithmus die Konturen von Muskeln, Fett und Knochen zu ermitteln.
Anhand dieser charakteristischen Strukturen werden Punkte ermittelt, deren Lagebeziehung zueinander Aussagen über Quantitäten und Qualitäten des Schlachttierkörperobjekts ermöglichen. Die Flächenkoordinaten dieser Punkte werden durch die Auswertungseinheit als Messpunkte festgelegt. Sie bilden die Grundlage für die weitere Vermessung.

Dabei ist anhand der Raumkoordinatendaten des Datentupels eines ersten Messpunktes und der Raumkoordinatendaten des Datentupels eines zweiten Messpunktes deren Abstand voneinander im Raum ermittelbar.
Je nach Anforderung ist auf diese Weise der räumliche euklidische Abstand der Messpunkte voneinander oder deren Abstand voneinander in dem relevanten Abschnitt der Oberfläche, im Falle einer Schlachttierkörperhälfte der spaltseitigen Oberfläche der Schlachttierkörperoberfläche, ermittelbar, wobei die Ermittlung der Abstände der Messpunkte auf der relevanten beziehungsweise spaltseitigen Oberfläche durch Integration der räumlichen Abstände von hinreichend kleinen Teilabständen des Gesamtabstands erfolgt.
Des Weiteren sind bei ausreichender Anzahl von Messpunkten auf diese Weise Flächen innerhalb der relevanten Abschnitte der Oberfläche und bei Schlachttierkörperhälften der spalt-seitigen Oberfläche über eine Integration hinreichend kleiner, räumlich exakt berechneter Teilflächen, ermittelbar.
In beiden Fällen können durch ein solches Vorgehen Messfehler, aufgrund unebener oder gekrümmter Oberflächenbereiche, wirksam vermieden werden. Je nach Komplexität, beispielsweise der spaltseitigen Oberfläche einer Schlachttierkörperhälfte, kann es weiterführend zur Erhöhung der Messgenauigkeit sinnvoll sein, eine lokale Glättung der optisch erfassten Oberfläche durchzuführen, insbesondere unter Einbeziehung der Tiefenwerte der Pixelnachbarschaft, und die Abstandswerte der Messpunkte auf der geglätteten Oberfläche im Sinne eines Modells mit einer ideal ebenen spaltseitigen Oberfläche zu berechnen.

Bei einer ausreichenden Anzahl von relevanten Messpunkten lassen sich neben Streckenmessungen auch Flächenmessungen ausführen und im Ergebnis Aussagen zur Beschaffenheit des Schlachttierkörperobjekts, wie beispielsweise zu Magerfleisch-, Fettgewebe- und Knochenanteilen, zur Lage organischer Strukturen und so weiter bestimmen. Hieraus lassen sich quantitative und qualitative Klassifikationsaussagen und Zerlegeentscheidungen ableiten.

Je nach Auflösung der Tiefen- und Bildkamera liegen die jeweils erfassten Bildpunkte der spaltseitigen Oberfläche der Schlachttierkörperhälfte in einer definierten Anzahl Pixel vor. Durch die Auswertungseinheit werden die Bilddaten auch bei unterschiedlichen Auflösungen der Tiefenkamera und der Bildkamera so zusammengeführt, dass für jedes Pixel mittels der zusammengeführten Lichtintensitätswertdaten und Raumkoordinatendaten neben den Flächenkoordinaten der Lichtintensitätswert und der Tiefenwert vorliegen.

Vorzugsweise weist die Vorrichtung auch Mittel zur Beleuchtung des Schlachttierkörperobjekts auf, wobei die Lichtfarbe zweckmäßigerweise so gewählt wird, dass eine gute Bildpunkterfassung möglich wird.

Die erfindungsgemäße Vorrichtung ermöglicht somit ein Vermessen des Schlachttierkörperobjekts an relevanten Abschnitten der Oberfläche, im Falle der Schlachttierkörperhälfte an deren spaltseitiger Oberfläche, mit wesentlichen Vorteilen gegenüber dem Stand der Technik, wobei die Vorteile bei der Vermessung von Schlachttierkörperhälften in besonderer Weise zur Geltung kommen.

Ein Vorteil besteht in einer hohen Messgenauigkeit, da eventuell vorhandene Ungleichmäßigkeiten, beispielsweise aufgrund der Positionierung einer Schlachttierkörperhälfte in Abstand und Winkel und einer eventuell nicht planen, spaltseitigen Oberfläche, durch den erfassten Tiefenwert korrigierbar sind.

Gleichzeitig können durch die erfindungsgemäß angewendeten Komponenten die Bereitstellungs- und Anwendungskosten einer derartigen Vorrichtung niedrig gehalten und ein hoher Durchsatz von zu vermessenden Schlachttierkörperobjekten gewährleistet werden.

Durch die erfindungsgemäße Einbeziehung des jeweiligen Tiefenwerts ist darüber hinaus ein Einhalten eines vorgegebenen Abstandes oder eines vorgegebenen Winkels zwischen der Schlachttierkörperhälfte und der Vorrichtung nicht zwingend, da die Abstandsinformation bereits durch den Tiefenwert an sich bereitstellbar ist. Damit können sonst erforderliche Zusatzvorrichtungen für eine exakte Positionierung der Schlachttierkörperhälfte oder zur Korrektur von Planunebenheiten entfallen. Die Bereitstellungs- und Betriebskosten einer erfindungsgemäßen Vorrichtung sind dadurch vergleichsweise niedrig.

Zudem kann die Messung berührungslos durchgeführt werden, womit auch hygienischen Risiken durch nach dem Stand der Technik bekannte Zusatzvorrichtungen zur Positionierung von Schlachttierkörperhälften beziehungsweise zusätzliche Vorkehrung in hygienischer Hinsicht entfallen.

In entsprechender Weise gelten die beschriebenen Vorteile auch bei der Vermessung sonstiger Schlachttierkörperobjekte, welche beispielsweise auf einem Transportband transportiert werden können. Bei einem Transportband besteht zwar nicht das Problem unkontrollierter Bewegungen. Trotzdem bietet die erfindungsgemäße Lösung auch hier einen besonderen Vorteil, da die Positionierung des Schlachttierkörperobjekts relativ zu dem Transportband, insbesondere quer zur Längserstreckung des Transportbandes ungenau sein kann, denn durch den Tiefenwert liegt bereits die Abstandsinformation vor. Durch die Abstandsinformation ist aber nicht lediglich die Position des Schlachttierkörperobjekts relativ zu der Bildkamera, sondern auch relativ zu dem Transportband bekannt. Da die Bewegung und Positionierung des Transportbandes als solches exakt gesteuert werden kann, kann so bei einem Weitertransport zu einer nachfolgenden Station auch eine Position des Schlachttierkörperobjekts relativ zu Mitteln einer solchen nachfolgenden Station, wie beispielsweise zu einem Zerlegeroboter, exakt vorbestimmt werden und das andere Mittel gemäß der bekannten Position gesteuert werden, ohne dass eine nochmalige Erfassung erforderlich ist.

Es wird somit aufgrund der immanenten Einbeziehung der Tiefenwerte als weiterer besonderer Vorteil ermöglicht, dass die erfindungsgemäße Vorrichtung nicht nur stationär, also mit einem festgelegten Abstand und Winkel zu dem Schlachttierkörperobjekt anwendbar ist, sondern auch mobil, beispielsweise als Handgerät, ausführbar ist. Auf diese Weise können beispielsweise auch Kontroll- oder Referenzmessungen durchgeführt werden, um beispielsweise die Funktionstüchtigkeit und Genauigkeit anderer Vermessungssysteme zu überprüfen.

In einer besonders vorteilhaften Weiterbildung der Erfindung ist die Bildkamera als Farbkamera ausgebildet.
Die Verwendung einer Farbkamera ermöglicht es in diesem Zusammenhang, die Lichtintensitätswerte separat nach einzelnen Farbkanälen, insbesondere Rot, Grün und Blau (RGB) zu erfassen und die Lichtintensitätswerte nach Farbkanälen getrennt in den Lichtintensitätswertdaten zu hinterlegen und an die Auswertungseinheit zu übertragen. Die Lichtintensitätswerte können dann nach Farbkanälen zur Bildanalyse verwendet werden, wodurch Konturen von Strukturen besser erkannt werden können.

Auf diese Art und Weise ist eine zusätzliche Optimierung der durch die erfindungsgemäße Vorrichtung erzielbaren Vermessungsgenauigkeit bereitstellbar.

Darüber hinaus sieht eine ebenso vorteilhafte Weiterbildung der Erfindung vor, dass der Tiefenwert aus den jeweils er-mittelten Raumkoordinaten zur Identifizierung von Messpunkten an der relevanten Oberfläche eines Schlachttierkörperobjekts verwendet wird.
Somit können, insbesondere bei einer unebenen spaltseitigen Oberfläche einer Schlachttierkörperhälfte, die Messpunkte anhand einer Einbeziehung der Tiefenwertinformationen besser identifiziert werden. Dies ist insbesondere dann der Fall, wenn, beispielsweise an dem Übergang einer Schnittebene in den Bauchraum, eine charakteristische Struktur durch die Tiefeninformation besser erkannt werden kann als durch die Lichtintensitätswertdaten.

In diesem Fall übernimmt der erfassbare Tiefenwert eine Doppelfunktion, in dem durch diesen zum einen die Raumkoordinaten der aus den Lichtintensitätswertdaten der Bildpunkten identifizierten Messpunkte bereitgestellt wird und indem darüber hinaus zum anderen die vorangehende Identifizierung der Messpunkte, insbesondere auf der spaltseitigen Oberfläche der Schlachttierkörperhälfte, erst ermöglicht oder zumindest unterstützt wird.
In besonderer Weise kann die Tiefeninformation auch dazu herangezogen werden, das Schlachttierkörperobjekt von dem Hintergrund abzugrenzen und somit dessen Kontur festzulegen. Tiefenwerte, die außerhalb eines definierten Bereichs liegen, namentlich Tiefenwerte oberhalb eines bestimmten Wertes, werden dann durch einen Auswertungsalgorithmus per se dem Hintergrund zugeordnet, ohne dass es hierfür noch einer Einbeziehung der Lichtintensitätswertdaten bedürfte. Dieses Verfahren ermöglicht es, die nach dem Stand der Technik üblichen Hintergrundwände überflüssig zu machen.
Zudem kann die Tiefeninformation als weiterer Vorteil auch dann herangezogen werden, wenn mehrere Schlachttierkörperobjekte eng beieinander, gegebenenfalls auch einander berührend, positioniert sind, wie dies beispielsweise in Kisten der Fall sein kann. In einem solchen Fall bereitet eine Abgrenzung der Schlachttierkörperobjekte voneinander ausschließlich mit Hilfe von Lichtintensitätswerten der Bildpunkte, auch bei einer Farbkamera als Bildkamera, große Probleme. Mittels der Tiefeninformation können die Vertiefungen und Verwerfungen an den Objektübergängen der Schlachttierkörperobjekte detektiert und auf Grundlage dieser detektierten Vertiefungen und Verwerfungen eine Abgrenzung bereitgestellt werden.

Einer weiteren vorteilhaften Weiterbildung liegt ein häufig auftretendes Problem zu Grunde, dass die reale Oberflächenform und eine modellhafte Idealform des Schlachttierkörperobjekts nicht übereinstimmen. Bei Schlachttierkörperhälften ist beispielsweise die spaltseitige Oberfläche in der modellhaften Idealform eine exakte Ebene. Die modellhaften Abstände von Messpunkten basieren auf der modellhaften Idealform. Die Abweichung von realer Oberflächenform und modellhafter Idealform bedingt eine Ungenauigkeit der Aussagekraft der Abstände der Messpunkte im Raum auf der Grundlage der realen Oberflächenform.

Es gehört zu den Vorteilen der Erfindung, dass auch für die Lösung dieses Problems die ohnehin durch die Tiefenkamera bereitstehende Abstandinformation, also der z-Wert der Raumkoordinaten verwandt werden kann.

Sofern die Areale mit Abweichungen bekannt sind, insbesondere wenn sie anatomisch oder technisch bedingt immer an der gleichen Stelle auftreten, können die Tiefenwerte von Punkten in diesen Arealen von der Bildung der modellhaften Idealoberfläche von vornherein ausgeschlossen oder geringer gewichtet werden. Sofern diese nicht bekannt sind, werden von einer Mehrzahl von Punkten die Punkte detektiert, welche einen, einen definierten Wert übersteigenden Abstand von dem durch die meisten anderen Punkte definierten Idealmodell aufweisen und auf dieser Grundlage ausgeschlossen oder geringer gewichtet werden. Die Modellanpassung und Ausreißerdetektion kann sich dabei bekannter Verfahren bedienen, beispielsweise RANSAC.

Ausgehend von der so gebildeten modellhaften Idealoberflächenform, im Falle einer Schlachttierkörperhälfte von der Ebene, werden die Raumkoordinaten der ermittelten Messpunkte gemäß dem modellhaften Vorwissen über die Ursache der Abweichung auf die ideale Modelloberfläche projiziert. Auf der Basis dieser so gebildeten Raumkoordinaten erfolgt dann die Bestimmung des Abstands der Messpunkte im Raum.

Eine weitere vorteilhafte Variante der Erfindung sieht vor, dass die Tiefenkamera als TOF-Kamera (Time Of Flight-Kamera) ausgebildet ist.
Eine TOF-Kamera ermöglicht auf an sich bekannte Art und Weise die Ermittlung einer Distanz zwischen ihr und einem erfassten Objekt mittels eines Laufzeitverfahrens.

Hierzu wird das erfasste Objekt mittels eines Lichtpulses angeleuchtet, wobei die Kamera für jeden angeleuchteten Bildpunkt die Zeit ermittelt, welche das Licht zum Objekt hin und von diesem wieder zurück zur Kamera benötigt.

Die Anwendung einer TOF-Kamera ist in mehrfacher Hinsicht von Vorteil.
Zum einen weisen TOF-Kameras in der Regel einen einfachen Aufbau auf und können somit verhältnismäßig kostengünstig bereitgestellt werden.
Zum anderen können durch TOF-Kameras hohe Bildraten realisiert werden, indem das gesamte Objekt in einer Aufnahme in sehr kurzer Zeit abgebildet wird. TOF-Kameras eignen sich daher speziell für die erfindungsgemäß vorgesehene Echtzeitanwendung.

Ferner entfällt das Erfordernis der Erkennung bestimmter Bildpunkte, wie dies beispielsweise bei Tiefenmessungen mittels Projektion oder mittels Stereokamerasystem der Fall ist.

In anderen Weiterbildungen können insbesondere Stereokamerasysteme, Stereokamerasysteme mit Projektion und Auswertung eines Punktmusters, Monokamerasysteme mit Projektion und Auswertung eines Punktmusters, wobei die Tiefeninformation durch die Verschiebung der Punkte des Punktmusters erlangt wird, zur Anwendung kommen.

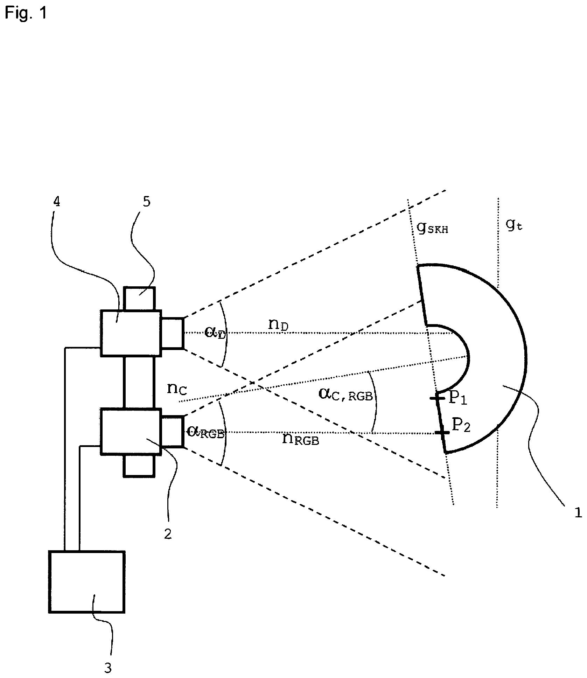

Die Erfindung wird als Ausführungsbeispiel anhand von
- Fig. 1: schematische Darstellung
- Fig. 2: schematische Darstellung mit Idealoberfläche
näher erläutert.

Bei dem Ausführungsbeispiel handelt es sich um eine Vorrichtung zur Vermessung eines Schlachttierkörperobjekts in Form einer Schlachttierkörperhälfte 1.

Eine erfindungsgemäße Vorrichtung zum Vermessen einer Schlachttierkörperhälfte 1 weist eine Bildkamera 2 und eine Tiefenkamera 3 auf.

Die Bildkamera 2 ist vorliegend als RGB-Kamera ausgebildet und weist einen Bildkameraerfassungsbereich mit einem Erfassungswinkel αRGB auf. Innerhalb des Bildkameraerfassungsbereichs ist durch die Bildkamera 2 eine spaltseitige Oberfläche der Schlachttierkörperhälfte 1, vorliegend durch die Ebenenachse g_{SKH} der spaltseitigen Oberfläche veranschaulicht, zumindest teilweise erfassbar.

Darüber hinaus sind durch die Bildkamera 2 in dem Bildkameraerfassungsbereich Lichtintensitätswerte (g) von Bildpunkten und deren Flächenkoordinaten (x, y) an der spaltseitigen Oberfläche der Schlachttierkörperhälfte 1 erfassbar.
Die erfassten Lichtintensitätswertdaten und Flächenkoordinaten werden ferner durch die Bildkamera 2 zu Lichtintensitätswertdaten (x, y, g) zusammengefasst und übertragbar bereitgestellt.

Die Übertragung der Lichtintensitätswertdaten erfolgt erfindungsgemäß an eine Auswertungseinheit 3, welche mit der Bildkamera 2 verbunden ist und welche die übertragenen Lichtintensitätswertdaten erfasst und weiterverarbeitet.

Die erfindungsgemäß vorgesehene Tiefenkamera 4 ist vorliegend als TOF-Kamera (Time Of Flight-Kamera) ausgebildet und weist einen Tiefenkameraerfassungsbereich mit einem Erfassungswinkel α_{D} auf.
In dem Tiefenkameraerfassungsbereich ist ebenfalls die spaltseitige Oberfläche der Schlachttierkörperhälfte 1 zumindest teilweise erfassbar.
Gleichzeitig sind durch die Tiefenkamera 4 Raumkoordinaten von Bildpunkten an der spaltseitigen Oberfläche der Schlachttierkörperhälfte 1 erfassbar, wobei sich die Raumkoordinaten jeweils aus Flächenkoordinaten (x, y) und einem Tiefenwert (z) zusammensetzen.

Die Raumkoordinaten werden durch die Tiefenkamera 4 als Raumkoordinatendaten (x, y, z) bereitgestellt und ebenfalls an die, auch mit der Tiefenkamera 4 verbundene, Auswertungseinheit 3 übertragen.

Die Bildkamera 2 und die Tiefenkamera 4 werden erfindungsgemäß mittels einer Positioniervorrichtung 5 so relativ zueinander positioniert, dass sich der Bildkameraerfassungsbereich und der Tiefenkameraerfassungsbereich zumindest teilweise in einem gemeinsamen, möglichst großen Erfassungsbereich überschneiden.

Die Auswertungseinheit 3 ist erfindungsgemäß dazu in der Lage, aus den erfassten Lichtintensitätswertdaten der Bildkamera 2 diskrete Messpunkte P₁, P₂ an der spaltseitigen Oberfläche der Schlachttierkörperhälfte 1 zu identifizieren und festzulegen.
Auf diese Weise wird eine Objekterkennung definierter Bereiche an der spalt-seitigen Oberfläche der Schlachttierkörperhälfte 1 derart ermöglicht, dass zum Beispiel Fettgewebebereichen Bildpunkte mit hohen Lichtintensitätswertdaten und Fleischgewebebereichen Bildpunkte mit geringen Lichtintensitätswertdaten zugeordnet werden. Aus den unterschiedlichen Lichtintensitätswertdaten kann dann automatisch eine Abgrenzung lichtintensiver Bildpunkte von lichtschwachen Bildpunkten und somit eine konkrete Abgrenzung von Fett- und Fleischgewebebereichen vorgenommen werden.
Die Messpunkte P₁ und P₂ werden anhand dieser Informationen anschließend so festgelegt, dass diese beispielsweise die äußeren Ränder eines Fettgewebebereichs kennzeichnen.

Des Weiteren ist die Auswertungseinheit 3 erfindungsgemäß dazu in der Lage, die durch die Bildkamera 2 bereitgestellten Lichtintensitätswertdaten und die durch die Tiefenkamera 4 bereitgestellten Raumkoordinatendaten anhand übereinstimmender Flächenkoordinaten einander zuzuordnen und so für jeden Messpunkt P₁, P₂ den zugehörigen Tiefenwert zu ermitteln.

Des Weiteren ermöglicht die Auswertungseinheit 3 ein Zusammenfassen der Lichtintensitätswertdaten und der Raumkoordinatendaten zu Datentupeln, wobei jedem Messpunkt P₁,P₂ ein Datentupel zuordenbar ist und wobei auf besonders vorteilhafte Weise, anhand der Datentupel der Messpunkte P₁, P₂, deren räumlicher Abstand voneinander ermittelt werden kann.
Es wird somit als besonderer technologischer Vorteil ein Vermessen der spaltseitigen Oberfläche der Schlachttierkörperhälfte 1 und eine Objekterkennung relevanter Bereiche in der Oberfläche ermöglicht, bei welchen die sonst üblichen, zweidimensionalen Flächeninformationen um den Tiefenwert ergänzt werden, um so eine dreidimensionale Objekterkennung an der spaltseitigen Oberfläche der Schlachttierkörperhälfte zu ermöglichen.

Die Anordnung der Bildkamera 2 und der Tiefenkamera 4 innerhalb einer erfindungsgemäßen Vorrichtung ist so ausgeführt, dass sich die jeweiligen Erfassungsbereiche der Kameras zumindest teilweise in einem gemeinsamen Erfassungsbereich überschneiden.
Die Erfassung der Bildpunkte erfolgt in dem gemeinsamen Erfassungsbereich vorliegend in Echtzeit, dass heißt dass zwischen dem Erfassen des jeweiligen Bildpunktes durch die Bildkamera 2 und dem Erfassen des gleichen Bildpunktes durch die Tiefenkamera 4 keine oder nur eine hinreichend kleine Relativbewegung der Schlachttierkörperhälfte 1 gegenüber der Vorrichtung erfolgt ist.

Vorliegend sind die Bildkamera 2 und die Tiefenkamera 4 so innerhalb der erfindungsgemäßen Vorrichtung angeordnet, dass die Normale n_{RGB} der Bildkamera und die Normale n_{D} der Tiefenkamera weitestgehend parallel sind und dass sich zwischen den Kameras ein Abstand d so einstellt, dass ein ausreichend großer gemeinsamer Erfassungsbereich bereitstellbar ist.

Die Schlachttierkörperhälfte 1 wird während der Vermessung durch eine erfindungsgemäße Vorrichtung an einer Transport-vorrichtung, hier als Rohrbahnsystem (nicht dargestellt) auf einer Bewegungsachse gt an der Vorrichtung vorbeigeführt.
Aufgrund der Einbeziehung der jeweiligen Tiefenwerte muss bei der Vermessung auf besonders vorteilhafte Art und Weise kein genaues Ausrichten der Schlachttierkörperhälfte 1 gegenüber der Vorrichtung vorgenommen werden. Vielmehr ist es hierbei ausreichend, wenn die spaltseitige Oberfläche der Schlachttierkörperhälfte 1 der Bildkamera 2 und der Tiefenkamera 4 soweit zugewandt ist, dass die rele-vanten Messpunkte P₁, P₂ eindeutig identifizierbar sind und eine ausreichend hohe Auflösung an Bildpunkten vorhanden ist.

Gegenüber bekannten Lösungen bietet die erfindungsgemäße Vorrichtung somit die technologischen Vorteile, dass eine sehr genaue Vermessung der spaltseitigen Oberfläche der Schlachttierkörperhälfte 1 und eine exakte Objekterkennung relevanter Oberflächenbereiche, wie beispielsweise Fett-, Fleisch- oder Knochengewebe automatisch durchgeführt werden können und das gleichzeitig, über die Einbeziehung der Tiefenwerte, etwaige Messunregelmäßigkeiten aufgrund einer ungenauen Positionierung der Schlachttierkörperhälfte 1 oder aufgrund vorhandener Unebenheiten der spaltseitigen Oberfläche der Schlachttierkörperhälfte 1 ausgeglichen werden können.

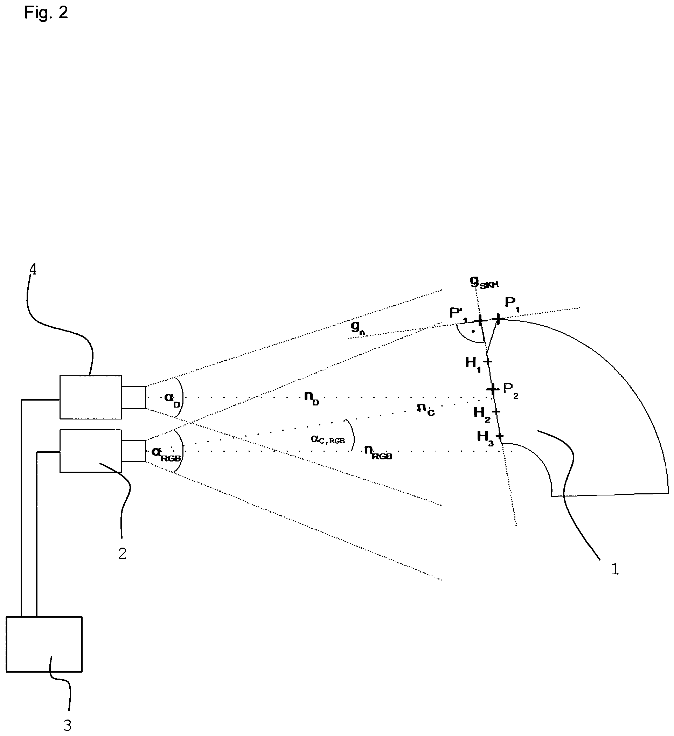

Fig. 2 zeigt eine besonders vorteilhaftes weiteres Ausführungsbeispiel der Erfindung, wobei zur Vereinfachung auf eine nochmalige Darstellung der Positioniervorrichtung und der Bewegungsachse der Schlachttierkörperhälfte 1 verzichtet wird.
Die in Fig. 2 dargestellte Schlachttierkörperhälfte 1 weist eine reale Oberflächenform auf, welche nicht mit einer modellhaften Idealform übereinstimmt, wobei im Ausführungsbeispiel als Idealform eine Ebene angenommen wird. Die Abweichung der realen Oberflächenform wird vorliegend durch die Position des ersten Messpunktes P₁ veranschaulicht. Der ermittelte Messpunkt P₁ liegt somit nicht auf der modellhaften Idealform der spaltseitigen Ebene, in der Figur 2 veranschaulicht durch eine Ebenenachse g_{SKH}.
Aufgrund der Abweichung des ermittelten Messpunktes P₁ von der idealisierten spaltseitigen Ebene würde sich auf Grundlage der realen Oberflächenform ein abweichender Abstand der Messpunkte im Raum einstellen.

Um die Ungenauigkeit durch solche aus der idealen Ebene abweichende Messpunkt zu verringern, sieht das weitere Ausführungsbeispiel gemäß Fig. 2 vor, dass auf der spaltseitigen Oberfläche der Schlachttierkörperhälfte 1 in einem ersten Schritt mehrere repräsentative Hilfspunkte, hier H₁ bis H₃, ermittelt werden. Aus diesen Hilfspunkten H₁ bis H₃ wird in einem nächsten Schritt eine idealisierte spaltseitige Ebene, dargestellt durch die Gerade g_{SKH}, definiert.

Anschließend wird erfindungsgemäß der abweichende Messpunkt P₁ auf die idealisierte spaltseitige Ebene projiziert und so der projizierte Messpunkt P₁' gebildet. Dem Messpunkt P₁ wird hierzu der z-Wert zugewiesen, der im Punkt der entsprechenden Flächenkoordinaten dem z-Wert der idealisierten spaltseitigen Ebene entspricht.

Zwischen dem projizierten Messpunkt P₁' und einem ferner ermittelten Messpunkt P₂ kann nun ein Abstand, zur weiteren Verwendung innerhalb einer Strecken- und/oder Flächenmessung, ermittelt und damit eine größere Genauigkeit erreicht werden.

### Verwendete Bezugszeichen

- 1: Schlachttierkörperhälfte
- 2: Bildkamera
- 3: Auswertungseinheit
- 4: Tiefenkamera

- n_{RGB}: Normale Bildkamera
- n_{D}: Normale Tiefenkamera
- n_{C}: Normale Schlachttierkörperhälfte
- g_{SKH}: Ebenenachse der Schlachttierkörperhälfte
- gₜ: Bewegungsachse Schlachttierkörperhälfte
- gₙ: Projektionsachse des ersten Messpunkts

- α_{RGB}: Erfassungswinkel Bildkamera
- α_{D}: Erfassungswinkel Tiefenkamera
- α_{C,RGB}: Winkel zwischen Schlachttierkörperhälfte und Bildkamera

- P₁: erster Messpunkt
- P₂: zweiter Messpunkt
- P₁': projizierter erster Messpunkt auf Idealoberfläche
- H₁: erster Hilfspunkt
- H₂: zweiter Hilfspunkt
- H₃: dritter Hilfspunkt

## Patentansprüche

1. Vorrichtung zur Vermessung eines Schlachttierkörperobjekts (1), aufweisend eine Bildkamera (2) mit einem Bildkameraerfassungsbereich, mit welchem ein Abschnitt einer Oberfläche des Schlachttierkörperobjekts optisch erfassbar ist und in welchem Lichtintensitätswerte von Bildpunkten und deren Flächenkoordinaten erfassbar sind, wobei die Lichtintensitätswerte und die zugeordneten Flächenkoordinaten als Lichtintensitätswertdaten übertragbar bereitstellbar sind,
und aufweisend eine Auswertungseinheit (3), wobei die Auswertungseinheit (3) mit der Bildkamera (2) verbunden ist und wobei die Auswertungseinheit (3) die durch die Bildkamera (2) bereitgestellten Lichtintensitätswertdaten erfasst,
**dadurch gekennzeichnet,**
**dass** die Vorrichtung eine Tiefenkamera (4) mit einem Tiefenkameraerfassungsbereich aufweist, in welchem der Abschnitt der Oberfläche des Schlachttierkörperobjekts optisch erfassbar ist und in welchem die Raumkoordinaten von Bildpunkten erfassbar sind, wobei die Raumkoordinaten aus Flächenkoordinaten und einem Tiefenwert bestehen und wobei die Raumkoordinaten als Raumkoordinatendaten übertragbar bereitstellbar sind,
und **dass** die Vorrichtung eine Positioniervorrichtung zur Positionierung der Tiefenkamera (4) relativ zu der Bildkamera (2) aufweist, wobei die Positionierung derart erfolgt, dass sich der Tiefenkameraerfassungsbereich und der Bildkameraerfassungsbereich in einem gemeinsamen Erfassungsbereich zumindest teilweise überschneiden,
und **dass** die Tiefenkamera (4) mit der Auswertungseinheit (3) verbunden ist, wobei die Auswertungseinheit (3) die durch die Tiefenkamera (4) bereitgestellten Raumkoordinaten erfasst und wobei aus den Lichtintensitätswertdaten Messpunkte (Pn) an dem Abschnitt der Oberfläche des Schlachttierkörperobjekts identifizierbar sind und wobei die Lichtintensitätswertdaten und die Raumkoordinatendaten anhand übereinstimmender Flächenkoordinaten zuordenbar sind und wobei die zugeordneten Lichtintensitätswertdaten und Raumkoordinatendaten als Datentupel bereitstellbar sind und wobei anhand der Raumkoordinatendaten eines Datentupels eines Bildpunktes eines ersten Messpunktes (P₁) und der Raumkoordinatendaten eines Datentupels eines Bildpunktes eines zweiten Messpunktes (P₂) der Abstand zwischen den beiden Mess-punkten (P₁, P₂) im Raum ermittelbar ist.

2. Vorrichtung nach Anspruch 1,
**dadurch gekennzeichnet,**
**dass** es sich bei dem Schlachttierkörperobjekt um eine Schlachttierkörperhälfte (1) handelt, welche eine Spaltseite aufweist, dass es sich bei dem Abschnitt der Oberfläche um die Oberfläche der Spaltseite handelt und dass mit dem Bildkameraerfassungsbereich und dem Tiefenkameraerfassungsbereich jeweils die Oberfläche der Spaltseite der Schlachttierkörperhälfte optisch erfassbar ist.

3. Vorrichtung nach Anspruch 1 oder 2,
**dadurch gekennzeichnet,**
**dass** die Bildkamera (2) als Farbwertkamera ausgebildet ist und dass die Lichtintensitätswerte separat nach Farbkanälen erfassbar sind, wobei die Lichtintensitätswerte separat nach Farbkanälen in den Lichtintensitätswertdaten vorliegen.

4. Vorrichtung nach einem der vorhergehenden Ansprüche,
**dadurch gekennzeichnet,**
**dass** der Tiefenwert aus den jeweils ermittelten Raumkoordinaten zur Identifizierung eines Messpunktes (P₁, P₂) an dem Abschnitt der Oberfläche eines Schlachttierkörperobjekts verwendbar ist.

5. Vorrichtung nach einem der vorhergehenden Ansprüche,
**dadurch gekennzeichnet,**
**dass** der Tiefenwert aus den jeweils ermittelten Raumkoordinaten einer Mehrzahl von Punkten auf dem Abschnitt der Oberfläche eines Schlachttierkörperobjekts für die Ermittlung einer modellhaften Idealoberflächenform verwendbar ist und dass der Abstand identifizierter Messpunkte (P₁, P₂) im Raum auf der Grundlage eines Tiefenwertes, der der modellhaften Idealoberflächenform entspricht, ermittelbar ist.

6. Vorrichtung nach einem der vorhergehenden Ansprüche,
**dadurch gekennzeichnet,**
**dass** die Tiefenkamera (4) als TOF-Kamera ausgebildet ist.

## Claims

1. A device for measuring a slaughter animal body object (1), comprising an image camera (2) with an image-camera recording range by means of which a section of a surface of the slaughter animal body object can be optically recorded and in which the light intensity values of image points and their area coordinates can be recorded, wherein the light intensity values and the area coordinates assigned to them can be provided as light intensity value data for transfer purposes,
and comprising an evaluation unit (3), with the evaluation unit (3) being connected to the image camera (2), and wherein the evaluation unit (3) is configured to register the light intensity value data provided by the image camera (2),
**characterized in that**
the device comprises a depth camera (4) with a depth-camera recording range in which the section of the surface of the slaughter animal body object can be recorded optically and in which the space coordinates of image points can be recorded, wherein the space coordinates consist of area coordinates and a depth value, and wherein the space coordinates can be provided as space coordinate data for transfer purposes,
and the device is equipped with a positioning unit for positioning the depth camera (4) relative to the image camera (2), wherein these cameras are positioned in relation to each other in such a manner that the depth-camera recording range and the image-camera recording range overlap in a common recording range at least in certain sections,
and the depth camera (4) is connected with the evaluation unit (3), wherein the evaluation unit (3) registers the space coordinates provided by the depth camera (4), and wherein measurement points (Pₙ) can be identified from the light intensity value data on the section of the surface of the slaughter animal body, and wherein the light intensity value data and the space coordinate data can be assigned on the basis of matching area coordinates, and wherein the assigned light intensity value data and the space coordinate data can be provided as data tuples, and wherein on the basis of the space coordinate data of a data tuple of an image point of a first measurement point (P₁) and on the basis of the space coordinate data of a data tuple of an image point of a second measurement point (P₂) the distance between the two measurement points (P₁, P₂) in the space can be determined.

2. A device according to claim 1,
**characterized in that**
the slaughter animal body object is a slaughter animal body half (1) which has a cutting side, the section of the surface is the surface of the cutting side, and the surface of the cutting side of the slaughter animal body half can be optically captured both by the image camera recording range and the depth camera recording range.

3. A device according to claim 1 or claim 2,
**characterized in that**
the image camera (2) is designed as a chromaticity camera and the light intensity values can be registered separately according to colour channels, wherein the light intensity values are provided separately according to colour channels in the light intensity value data.

4. A device according to any one of the previous claims,
**characterized in that**
the depth value from the individually determined space coordinates can be used for identifying a measurement point (P₁, P₂) at the section of the surface of a slaughter animal body object.

5. A device according to any one of the previous claims,
**characterized in that**
the depth value from the individually determined space coordinates of a plurality of points on the section of the surface of a slaughter animal body object can be used for determining a model-like ideal surface shape, and the distance of identified measurement points (P₁, P₂) in the space can be determined on the basis of a depth value that corresponds to the model-like ideal surface shape.

6. A device according to any one of the previous claims,
**characterized in that**
the depth camera (4) is designed as a TOF camera.

## Revendications

1. Dispositif pour la mesure d'un objet de carcasse d'animaux (1), comprenant une caméra d'imagerie (2) avec une zone de saisie d'images avec laquelle une partie de la surface de l'objet de carcasse d'animaux peut être saisie optiquement et dans laquelle les valeurs de l'intensité lumineuse de pixels et ses coordonnées de surface peuvent être enregistrées, et les valeurs de l'intensité lumineuse et les coordonnées bidimensionelles attribuées de surface peuvent être prévues comme données de valeurs de l'intensité lumineuse aux fins de transmission, et comprenant une unité d'évaluation (3) et l'unité d'évaluation (3) étant liée à la caméra d'imagerie (2) et l'unité d'évaluation (3) enregistre les valeurs de l'intensité lumineuse fournies par la caméra d'imagerie (2), est **caractérisée en ce**
**que** le dispositif comprend une caméra de profondeur (4) avec une zone de saisie d'images, dans laquelle la partie de la surface de l'objet de carcasse d'animaux peut être saisie optiquement et dans laquelle les coordonnées spatiales de pixels peuvent être saisies et les coordonnées spatiales étant formées des coordonnées bidimensionelles et une valeur de profondeur et les coordonnées spatiales peuvent être prévues comme données de coordonnées spatiales aux fins de transmission,
et **que** le dispositif comprend un dispositif de positionnement pour positionner la caméra de profondeur (4) par rapport à la caméra d'imagerie (2) et le positionnement s'effectue de telle sorte que la zone de saisie d'images de la caméra de profondeur et la zone de saisie d'images de la caméra d'imagerie se superposent au moins partiellement dans une zone commune de saisie,
et **que** la caméra de profondeur (4) est lièe à l'unité d'évaluation (3) et l'unité d'évaluation (3) saisit les coordonnées spatiales fournies par la caméra de profondeur (4) et des points de mesure (Pn) peuvent être identifiés à partir des données de valeurs de l'intensité lumineuse sur la partie de la surface de l'objet de carcasse d'animaux et les données de valeurs de l'intensité lumineuse et les données spatiales peuvent être assignées à l'aide des coordonnées bidimensionelles concordantes et les données de valeurs de l'intensité lumineuse et les données de coordonnées spatiales assignées peuvent être prévues comme tuple de données et à l'aide des coordonnées spatiales d'un tuple de données d'un pixel d'un premier point de mesure (P₁) et des coordonnées spatiales d'un tuple de données d'un pixel d'un deuxième point de mesure (P₂) la distance entre les deux points de mesure (P₁, P₂) dans l'espace peut être déterminée.

2. Dispositif suivant la revendication 1
est **caractérisée en ce**
**que** l'objet de carcasse d'animaux est une demi-carcasse d'animaux (1) comprenant un côté de coupe, que la partie de la surface est la surface du côté de coupe et que la surface du côté de coupe de la demi-carcasse d'animaux peut respectivement être saisie optiquement grâce à la zone de saisie d'images de la caméra de profondeur et la zone de saisie d'images de la caméra d'imagerie.

3. Dispositif suivant les revendications 1 ou 2
est **caractérisée en ce**
**que** la caméra d'imagerie (2) est conçue comme caméra chromatique et que les valeurs de l'intensité lumineuse peuvent être saisies séparément suivant des canaux de couleur, les valeurs de l'intensité lumineuse étant disponibles séparément suivant les canaux de couleur dans les données de valeurs de l'intensité lumineuse.

4. Dispositif suivant une des revendications précédentes
est **caractérisée en ce**
**que** la valeur de profondeur à partir des coordonnées spatiales respectivement déterminées peut être utilisée pour identifier un point de mesure (P₁, P₂) sur la partie de la surface d'un objet de carcasse d'animaux.

5. Dispositif suivant une des revendications précédentes
est **caractérisée en ce**
**que** la valeur de profondeur à partir des coordonnées spatiales respectivement déterminées pour la plupart des points sur la partie de la surface d'un objet de carcasse d'animaux peut être utilisée pour déterminer un modèle de forme de surface idéale et que la distance entre les points de mesure identifiés (P₁, P₂) dans l'espace peut être déterminée sur la base d'une valeur de profondeur correspondant au modèle de forme de surface idéale.

6. Dispositif suivant une des revendications précédentes
est **caractérisée en ce**
**que** la caméra de profondeur (4) est conçue comme caméra TOF.
